# EUROPÄISCHE PATENTSCHRIFT

(11) **EP 0 869 038 B1**
(45) Veröffentlichungstag und Bekanntmachung des Hinweises auf die Patenterteilung: **09.01.2002**
(21) Anmeldenummer: 98106082.5
(22) Anmeldetag: 02.04.1998
(51) Int. Cl.: B60R 13/10, G09F 7/00

(54) **Feuersicheres Kennzeichnungsschild**
Fireproof identification plate
Plaque d'immatriculation ininflammable

(30) Priorität: 03.04.1997 DE 29706405 U
(43) Veröffentlichungstag der Anmeldung: 07.10.1998
(73) Patentinhaber: MAZON b.v., 6422 PE Heerlen (NL)
(72) Erfinder: Conrad, Mechthild, 57627 Hachenburg (DE); Strunk, Hans-Ullrich, 57627 Hachenburg (DE); Weber, Edgar, 57645 Nister (DE)
(74) Vertreter: Kohlmann, Kai, Dipl.-Ing.

(56) Entgegenhaltungen:
- EP-A- 0 064 708
- EP-A- 0 292 753
- DE-U- 29 516 182
- FR-A- 2 659 470

## Beschreibung

Die Erfindung betrifft ein feuersicheres Kennzeichnungsschild insbesondere für Gefahrguttransporte, bei welchem auf einer Grundplatte aus hochtemperaturbeständigem Material über einer Zwischenlage Zeichen mit farblich kontrastierender Sichtfläche angeordnet sind.

Die Kennzeichnung von Gefahrguttransporten ist durch internationale Gesetzgebung geregelt (GGVS/ADR). Die gesetzlichen Regelungen führen aus, dass bestimmte Gefahrguttransporte mit einer Gefahrnummer (im oberen Teil des Schildes) und einer Stoffnummer (im unteren Teil des Schildes) zu kennzeichnen sind. Die einzelnen Spezifikationen hierzu befinden sich in der Randnummer 10.500 der vorgenannten Gesetze. Hiernach müssen die Kennzeichnungsnummern 100 mm hoch sein bei 15 mm Balkenstärke und die Kennzeichnungsnummern müssen unauslöschbar und nach einem Brand von 15 Minuten Dauer noch lesbar sein.

Diese seit über 20 Jahren existierende Vorschrift wird in der Praxis dergestalt umgesetzt, dass die Kennzeichnungsnummern erhaben geprägt sind aus Stahlblech, Beispiele für derart geprägte Kennzeichnungsschilder finden sich in den Dokumenten DE-U-75 32 214 und DE-U-76 35 809. Diese Kennzeichnungsschilder finden sich im Lieferprogramm aller namhaften europäischen Hersteller.

Die DE-U-87 15 053, die dem Oberbegriff der Anspruchs 1 entspricht beschreibt eine Warntafel für Tankfahrzeuge, die mit einer orangefarbig rückstrahlenden Oberfläche versehen ist, die schwarze Ziffern aufnimmt. Um die Ziffernfolge der Warntafel schnell ändern zu können, ist hinter der Warntafel eine drehbare Platte mit verschiedenen Ziffern angeordnet, die durch Verdrehen in Ausnehmungen der Warntafel sichtbar gemacht werden können. Die Ziffern der drehbaren Platte sind ausgeprägt und daher erhaben. Hierdurch wird die Lesbarkeit der Ziffern verbessert und eine Sicherung gegen unbeabsichtigtes Verdrehen der drehbaren Platte gegenüber der Warntafel erreicht.

Mehrfach wurde in den vergangenen Jahren der Versuch unternommen, zu anderen technischen Lösungsmöglichkeiten zu gelangen, da bekannt und auch durch entsprechende Brandversuche dokumentiert ist, dass sich die geprägten Stahlziffern nach einem Brand von 15 Minuten Dauer nicht oder nur sehr schlecht lesen lassen. Die EP-A- 0 292 753 beschreibt ein feuersicheres Kennzeichnungsschild, wo die entsprechenden Zeichen aus der Schildplatte ausgestanzt sind. Die Ausstanzungen werden durch ein farblich kontrastierendes Material auf der dem Betrachter abgewandten Seite abgedeckt oder durch ein solches Material ausgefüllt. Die Zeichen bleiben auch nach einem Brand lesbar, wenn das kontrastierende Material weggebrannt ist.

Das Bundesamt für Materialforschung und -prüfung in Berlin (BAM) hat nach Durchführung eines Brandversuches mit Schriftsatz vom 14.2.1992 dem Kennzeichnungsschild nach der EP-A- 0 292 753 mit Prüfungszeugnis Nr. 1.5/32941 bescheinigt, dass die Vorschriften der GGVS/ADR Rn 10500 erfüllt sind, wobei jedoch Einschränkungen gemacht werden.
So wird im vorerwähnten Prüfungszeugnis des BAM ausgeführt, dass die Lesbarkeit der Kennzeichnungsnummern während der ersten 15 Minuten des Brandversuches durch den geschmolzenen Kunststoff deutlich eingeschränkt war und dass das Schild nach der Abkühlung ebenfalls nicht mehr deutlich lesbar war. Hierbei wird sogar dokumentiert, dass Verwechslungen bei den Ziffern auftreten können.

Das Problem besteht darin, ein feuersicheres Kennzeichnungsschild zu schaffen, dessen Zeichen während des Brandes und nach einem Brand eindeutig und vollständig lesbar sind.

Der Gesetzgeber hat seine Forderung "... nach einem Brand von 15 Minuten Dauer noch lesbar ..." bis dato leider noch nicht verbindlich spezifiziert, dergestalt, dass klar ausgeführt wird, aus welcher Entfernung und bei welchen Lichtverhältnissen die Lesbarkeit gegeben sein muss. Weiterhin geht aus dem Gesetzestext nicht eindeutig hervor, ob der Brand nach 15 Minuten als erloschen zu betrachten ist oder ob das Feuer, dem das Kennzeichnungsschild ausgesetzt ist, nach 15 Minuten noch weiterbrennt.

Veröffentlicht ist hierzu lediglich eine vom Bundesminister für Verkehr am 20. Juni 1990 ergangene Richtlinie Nr. 137 "Technische Richtlinien zur Gefahrgutverordnung Straße (TRS006)", in welcher als "Kann-Vorschrift" ein Brandversuch gem. Rn 637 Abs. 3 GGVS/ADR durchzuführen ist. Diese Brandversuchsvorschrift bezieht sich auf Verpackungen, wobei der Prüfling für eine Dauer von 30 Minuten einer Hitzeeinwirkungen von 800 ° C ausgesetzt wird.

Die Aufgabe der Erfindung besteht daher darin, ein Kennzeichnungsschild zu schaffen, dessen Zeichen unter praktischen Bedingungen während und nach einem Brand lesbar sind. Bei der Lösung dieser Aufgabe ist zu berücksichtigen, dass ein Brand nicht nur eine enorme Hitzeeinwirkung hervorruft, sondern dass es darüber hinaus auch zu starker Rußbildung kommen kann, welche die Lesbarkeit der Zeichen ebenfalls erheblich erschweren kann.

Diese Aufgabe wird mit einem Kennzeichnungsschild gemäß den Merkmalen des Patentanspruchs 1 gelöst. Hierbei ist berücksichtigt und wird vorteilhaft angewendet, dass der Gesetzgeber in der GGVS/ADR Rn 10500 einen retroreflektierenden Hintergrund fordert, auf welchem schwarze Zeichen die Gefahrund Stoffnummer bilden.

Erfindungsgemäß wird die Lesbarkeit durch Kontrastbildung der Zeichen mit dem Hintergrund vor, während und nach dem Brand sichergestellt. Zu diesem Zweck werden unterschiedliche hochtemperaturbeständige Materialien verwendet, welche in Verbindung mit der retroreflektierenden Folie unter Hitzeeinwirkung kontrastierende Sichtflächen annehmen. Die Zeichen sind ebenfalls aus hochtemperaturbeständigem Material ausgeführt und einzeln ausdecoupiert. Sie sind hochtemperaturbeständig dauerhaft oder abnehmbar mit der Grundplatte des Schildes verbunden.

Das Kennzeichnungsschild ist einfach und kostengünstig aufgebaut. Gegenüber der EP-A 292 753, wo die ausgestanzten Ziffern der Grundplatte zusätzlich mit Kunststoff ausgefüllt sind, werden erfindungsgemäß nur ausdecoupierte Einzelzeichen verwendet.

Während des Brandes bleibt die Lesbarkeit durch Kontrastbildung der Sichtflächen von Grundplatte und Zeichen erhalten, wohingegen bei geprägten Ziffern die Lesbarkeit nach dem Wegbrennen der reflektierenden Folie sehr stark herabgesetzt ist und bei den ausgestanzten Ziffern, welche mit Kunststoff gefüllt sind, das Abschmelzen des Kunststoffes die Lesbarkeit ebenfalls stark beeinträchtigt.

Nach dem Abkühlen des Kennzeichnungsschildes bleiben die kontrastierenden Sichtflächen der Grundplatte und der einzelnen ausdecoupierten Zeichen erhalten. Bei geprägten Ziffern ist versuchsgemäß nur eine grauweiße oder braunschwarze Oberfläche der Ziffernblättchen erkennbar, aus der sich die eingeprägte Ziffer unleserlich als Kontur abhebt. Das Kennzeichnungsschild gem. EP-A- 0 292 753 zeigt nach dem Abkühlen ebenfalls erhebliche Probleme in der Lesbarkeit, wie sich aus dem Prüfungszeugnis des BAM ergibt.

Durch die Verwendung ausdecoupierter Zeichen zur Bildung der Kennzeichnungsnummer (Gefahr- und Stoffnummer) bleibt diese Kennzeichnungsnummer sogar noch bei einer starken Verrußung des Kennzeichnungsschildes wesentlich besser lesbar, als die geprägten Einzelziffern, welche durch Rußeinwirkung völlig unleserlich werden.

In einer bevorzugten Ausgestaltung der Erfindung nach Anspruch 4 besteht die Grundplatte aus Galfan, einem Stahlblech mit einer Oberflächenveredelung aus Zinkaluminium (ZA), während die Zwischenlage aus einer selbstklebenden, retroreflektierenden Folie hergestellt ist und die Zeichen aus Edelstahlblech ausdecoupiert sind, wobei die Zwischenlage mit der Grundplatte verklebt ist und die Zeichen dauerhaft oder abnehmbar mit der Grundplatte hochtemperaturbeständig verbunden sind.

In einer bevorzugten Ausgestaltung der Erfindung nach Anspruch 5 besteht die Grundplatte aus Galvalume, dass heißt einem Stahlblech mit der Oberflächenveredelung Aluminiumzink (AZ), während die Zwischenlage aus einer selbstklebenden, retroreflektierenden Folie hergestellt ist und die Zeichen aus Edelstahlblech ausdecoupiert sind, wobei die Zwischenlage mit der Grundplatte verklebt ist und die Zeichen dauerhaft oder abnehmbar mit der Grundplatte hochtemperaturbeständig verbunden sind.

In einer Ausgestaltung der Erfindung nach Anspruch 9 sind die Zeichen beispielsweise vorderseitig lackiert, kunststoffbeschichtet bzw. farblich beklebt, wobei diese Oberflächenbeschichtung bei einer Temperatur ab 200 ° C leicht und rückstandsfrei wegbrennt. Alternativ sind die Zeichen oberflächenverzundert ausgeführt.

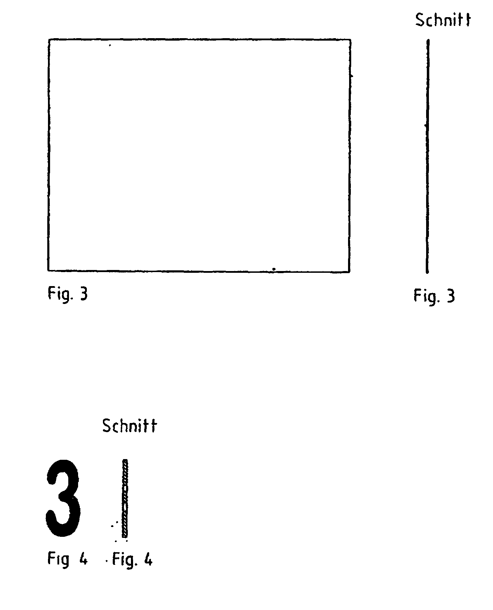

Ein Ausführungsbeispiel der Erfindung wird anhand der Figuren 1 - 4 erläutert. Es zeigen:
- Figur 1:: ein feuersichere Kennzeichnungsschild
- Figur 2:: eine Grundplatte aus verzinktem Stahlblech
- Figur 3:: eine Zwischenlage aus einer selbstklebenden retroreflektierenden Folie und
- Figur 4:: ein ausdecoupiertes Zeichen aus Edelstahlblech

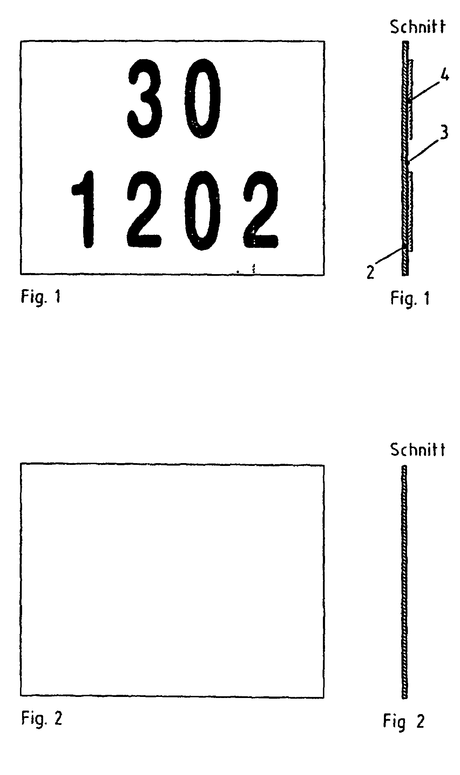

In Figur 1 ist dargestellt, dass ausdecoupierte Zeichen (4) über eine Zwischenlage (3) auf einer Grundplatte (2) befestigt sind. Hierbei wird eine hochtemperaturbeständige Verbindung der Zeichen (4) mit der Grundplatte (2) gem. den Ansprüchen 7, 8 angenommen. Die Zwischenlage (3) ist gesetzgebungsgemäß aus orangefarbener retroreflektierender Folie ausgeführt und direkt auf die Grundplatte (2) aus verzinktem Stahlblech aufgeklebt. Die Zeichen (4) zur Bildung der Kennzeichnungsnummern haben eine leicht und rückstandsfrei wegbrennende schwarze Oberflächenbeschichtung gemäß Patentanspruch 9, 10.

Wird dieses feuersichere Kennzeichnungsschild (1) nunmehr einer großen Hitzeeinwirkung von mehr als 600 C ausgesetzt, so tritt versuchsgemäß folgende Wirkung ein:

Die Zeichen (4) aus Edelstahl verfärben sich unmittelbar nach dem Wegbrennen der schwarzen Oberflächenbeschichtung braun und nehmen im Verlaufe der weiteren Hitzeeinwirkung eine schwarzblaue Färbung an.

Gleichzeitig hiermit verbrennen die Kunststoffbestandteile der Zwischenlage (3). Der Aluminiumreflektor, welcher in der retroreflektierenden Folie eingebettet ist, schlägt sich auf der Grundplatte (2) nieder und bildet eine weißgraue Sichtfläche, welche hervorragend mit der schwarzblauen Sichtfläche der Zeichen (4) kontrastiert.

Obwohl sich auch das Stahlblech der Grundplatte (2) im Laufe der Hitzeeinwirkung unter der Verzinkung dunkel verfärbt, behält die Grundplatte (2) eine helle weißgraue Oberfläche, welche mit der schwarzblauen Farbe der Zeichen (4) hervorragend kontrastiert und somit eine sehr gute Lesbarkeit der Kennzeichnungsnummer ergibt.

Nach dem Abkühlen der Tafel bleibt die Sichtfläche der Zeichen (4) dunkel und die Sichtfläche der Grundplatte (2) hell, weshalb auch jetzt noch eine hervorragende Lesbarkeit der Kennzeichnungsnummern gegeben ist.

Die erfindungsgemäß vorgesehene hochtemperaturbeständige Verbindung der Zeichen (4) mit der Grundplatte (2) gewährleistet darüber hinaus, dass die Zeichen (4) in ihrer Anordnung, welche sie vor dem Brand auf der Grundplatte (2) hatten, erhalten bleiben.

Die Kennzeichnung von Gefahrguttransporten ist mittlerweile in 32 Ländern Europas gesetzlich vorgeschrieben.

Hieraus ergibt sich ein breites Anwendungsgebiet für die Erfindung.

## Patentansprüche

1. Feuersicheres Kennzeichnungsschild, insbesondere für Gefahrguttransporte, mit einer Grundplatte (2), einer auf der Grundplatte (2) angeordneten Zwischenlage (3) in Form oder mit einer retroreflektierenden Folie und über der Grundplatte (2) angeordneten Zeichen (4) mit farblich kontrastierender Sichtfläche, die mit der Grundplatte (2) hochtemperaturbeständig verbunden sind, wobei hochtemperaturbeständige Materialien für die Zeichen (4) und die Grundplatte (2) verwendet sind, **dadurch gekennzeichnet, daß** diese Zeichen (4) ausdecoupierte, über der Zwischenlage angeordnete Einzelzeichen (4) sind, welche in Verbindung mit der Zwischenlage (3) unter Hitzeeinwirkung kontrastierende Sichtflächen annehmen.

2. Feuersicheres Kennzeichnungsschild nach Anspruch 1,
**dadurch gekennzeichnet, dass** die Grundplatte (2) aus verzinktem Stahlblech besteht, die Zwischenlage (3) aus einer selbstklebenden, retroreflektierenden Folie hergestellt ist und die Zeichen (4) aus Edelstahlblech ausdecoupiert sind, wobei die Zwischenlage (3) mit der Grundplatte (2) verklebt ist und die Zeichen (4) dauerhaft oder abnehmbar mit der Grundplatte (2) verbunden verbunden sind.

3. Feuersicheres Kennzeichnungsschild nach Anspruch 1, **dadurch gekennzeichnet, dass** die Grundplatte (2), aus Edelstahlblech besteht, die Zwischenlage (3) aus einer schnell und rückstandsfrei wegbrennenden Kunststoffplatte besteht, welche vorderseitig mit einer retroreflektierenden Folie beschichtet ist, und die Zeichen (4) aus verzinktem Stahlblech ausdecoupiert sind, wobei die Zeichen (4) über die Zwischenlage (3) dauerhaft oder abnehmbar mit der Grundplatte (2) verbunden sind.

4. Feuersicheres Kennzeichnungsschild nach Anspruch 1, **dadurch gekennzeichnet, dass** die Grundplatte (2) ein Stahlblech mit einer Oberflächenveredelung aus Zinkaluminium ist, die Zwischenlage (3) aus einer selbstklebenden, retroreflektierenden Folie hergestellt ist und die Zeichen (4) aus Edelstahlblech ausdecoupiert sind, wobei die Zwischenlage (3) mit der Grundplatte (2) verklebt ist und die Zeichen (4) dauerhaft oder abnehmbar mit der Grundplatte (2) verbunden sind.

5. Feuersicheres Kennzeichnungsschild nach Anspruch 1, **dadurch gekennzeichnet, dass** die Grundplatte (2) ein Stahlblech mit der Oberflächenveredelung Aluminiumzink ist, die Zwischenlage (3) aus einer selbstklebenden, retroreflektierenden Folie hergestellt ist und die Zeichen (4) aus Edelstahlblech ausdecoupiert sind, wobei die Zwischenlage (3) mit der Grundplatte (2) verklebt ist und die Zeichen (4) dauerhaft oder abnehmbar mit der Grundplatte (2) verbunden sind.

6. Feuersicheres Kennzeichnungsschild nach einem oder mehreren der Ansprüche 1 bis 5, **dadurch gekennzeichnet, dass** die Zeichen (4) über der Zwischenlage (3) auf der Grundplatte (2) durch Verbindungsteile aus Stahl und/oder Edelstahl befestigt sind.

7. Feuersicheres Kennzeichnungsschild nach einem oder mehreren der Ansprüche 1 bis 5, **dadurch gekennzeichnet, dass** die Zeichen (4) über der Zwischenlage (3) mit der Grundplatte (2) verpresst oder verschweißt sind.

8. Feuersicheres Kennzeichnungsschild nach Anspruch 1, **dadurch gekennzeichnet, dass** die Zeichen (4) eine Oberflächenbeschichtung aufweisen, die bei einer Temperatur ab 200 ° C leicht und rückstandsfrei wegbrennt.

9. Feuersicheres Kennzeichnungsschild nach Anspruch 1, **dadurch gekennzeichnet, dass** die Zeichen (4) oberflächenverzundert ausgeführt sind.

10. Feuersicheres Kennzeichnungsschild nach Anspruch 1, **dadurch gekennzeichnet, dass** die Zeichen (4) mit Abstand zu der Zwischenlage (3) angeordnet sind.

## Claims

1. A fireproof identification sign, in particular for hazardous materials transport, comprising a base plate (2) an intermediate layer (3) arranged on the base plate (2) in the form of or incorporating a retroreflective foil, and characters (4), arranged above the base plate (2), which provide a visual colour contrast, said characters (4) being connected so as to provide high temperature stability to the base plate (2), whereby high-temperature resistant materials are used for the characters (4) and the base plate (2), **characterised in that** these characters (4) are cut out individual characters (4) arranged above the intermediate layer, with said individual characters (4) in conjunction with the intermediate layer (3) providing contrasting visual areas when exposed to heat.

2. A fireproof identification sign according to claim 1, **characterised in that** the base plate (2) comprises galvanised sheet steel, the intermediate layer (3) is made from a self-adhesive retroreflective foil and the characters (4) are cut out from high-grade sheet steel, with the intermediate layer (3) being bonded to the base plate (2) and the characters (4) being permanently or removably connected to the base plate (2).

3. A fireproof identification sign according to claim 1, **characterised in that** the base plate (2) comprises high-grade sheet steel, the intermediate layer (3) comprises a plastic plate which quickly burns off without leaving any residue, said plastic plate on the front being coated with a retroreflective foil, and with the characters (4) being cut out from galvanised sheet steel, with the characters (4) above the intermediate layer (3) being permanently or removably connected to the base plate (2).

4. A fireproof identification sign according to claim 1, **characterised in that** the base plate (2) comprises a sheet steel with a surface refinement made of zinc aluminium, with the intermediate layer (3) being made from a self-adhesive retroreflective foil, and with the characters (4) being cut out from high-grade sheet steel, with the intermediate layer (3) being bonded to the base plate (2) and with the characters (4) being permanently or removably connected to the base plate (2).

5. A fireproof identification sign according to claim 1, **characterised in that** the base plate (2) comprises a sheet steel with a surface refinement made of aluminium zinc, with the intermediate layer (3) being made from a self-adhesive retroreflective foil, and with the characters (4) being cut out from high-grade sheet steel, with the intermediate layer (3) being bonded to the base plate (2) and with the characters (4) being permanently or removably connected to the base plate (2).

6. A fireproof identification sign according to one or several of claims 1 to 5, **characterised in that** the characters (4) above the intermediate layer (3) are attached to the base plate (2) via connecting parts made of steel and/or high-grade steel.

7. A fireproof identification sign according to one or several of claims 1 to 5, **characterised in that** the characters (4) above the intermediate layer (3) are attached to the base plate (2) via pressing or welding.

8. A fireproof identification sign according to claim 1, **characterised in that** the characters (4) comprise a surface coating which easily burns off at a temperature from 200 °C onwards without leaving any residue.

9. A fireproof identification sign according to claim 1, **characterised in that** the characters (4) are surface oxidised.

10. A fireproof identification sign according to claim 1, **characterised in that** the characters (4) are arranged at a distance to the intermediate layer (3)

## Revendications

1. Plaque signalétique à l'épreuve du feu, en particulier destinée aux transports de marchandises dangereuses, ayant une plaque de base (2), une couche intermédiaire (3) disposée sur la plaque de base (2) sous forme de feuille rétro-réfléchissante ou avec celle-ci, et des symboles (4) disposés sur la plaque de base (2) ayant une surface visible contrastée en couleur, qui sont fixés à la plaque de base (2) de façon à résister aux hautes températures, dans laquelle on emploie des matières résistantes aux hautes températures pour les symboles (4) et la plaque de base (2), **caractérisée en ce que** ces symboles (4) sont des symboles individuels découpés disposés sur la couche intermédiaire, lesquels, en liaison avec la couche intermédiaire (3), prennent des surfaces visibles contrastantes sous l'effet de la chaleur.

2. Plaque signalétique à l'épreuve du feu selon la revendication 1, **caractérisée en ce que** la plaque de base (2) est constituée de tôle d'acier zinguée, la couche intermédiaire (3) est préparée à partir d'une feuille auto-adhésive, rétro-réfléchissante, et les symboles (4) sont découpés dans de la tôle d'acier inox, la couche intermédiaire (3) étant collée à la plaque de base (2) et les symboles étant fixés à la plaque de base de façon permanente ou détachable.

3. Plaque signalétique à l'épreuve du feu selon la revendication 1, **caractérisée en ce que** la plaque de base (2) est constituée de tôle d'acier inox, la couche intermédiaire (3) est constituée d'une plaque de matière plastique qui s'élimine rapidement par calcination et sans résidu, qui est revêtue sur la face avant d'une feuille rétro-réfléchissante, et les symboles (4) sont découpés dans de la tôle d'acier zinguée, les symboles (4) étant fixé à la plaque de base par la couche intermédiaire (3) de façon permanente ou détachable.

4. Plaque signalétique à l'épreuve du feu selon la revendication 1, **caractérisée en ce que** la plaque de base (2) est une tôle d'acier ayant une finition de surface constituée de zinc-aluminium, la couche intermédiaire (3) est préparée à partir d'une feuille auto-adhésive rétro-réfléchissante et les symboles (4) sont découpés dans de la tôle d'acier inox, la couche intermédiaire (3) étant collée à la plaque de base (2) et les symboles (4) étant fixés à la plaque de base (2) de façon permanente ou détachable.

5. Plaque signalétique à l'épreuve du feu selon la revendication 1, **caractérisée en ce que** la plaque de base (2) est une tôle d'acier ayant la finition de surface constituée d'aluminium-zinc, la couche intermédiaire (3) est préparée à partir d'une feuille auto-adhésive, rétro-réfléchissante, et les symboles (4) sont découpés dans de la tôle d'acier inox, la couche intermédiaire (3) étant collée à la plaque de base (2) et les symboles (4) étant fixés à la plaque de base (2) de façon permanente ou détachable.

6. Plaque signalétique à l'épreuve du feu selon l'une ou plusieurs des revendications 1 à 5, **caractérisée en ce que** les symboles (4) sur la couche intermédiaire (3) sont fixés à la plaque de base (2) à l'aide de composants de raccordement constitués d'acier et/ou d'acier inox.

7. Plaque signalétique à l'épreuve du feu selon l'une ou plusieurs des revendications 1 à 5, **caractérisée en ce que** les symboles (4) sur la couche intermédiaire (3) sont pressés ou soudés à la plaque de base (2).

8. Plaque signalétique à l'épreuve du feu selon la revendication 1, **caractérisée en ce que**, les symboles (4) présentent un revêtement de surface qui s'élimine facilement par calcination et sans résidu à une température d'au moins 200 °C.

9. Plaque signalétique à l'épreuve du feu selon la revendication 1, **caractérisée en ce que** les symboles (4) sont réalisés avec une surface oxydée.

10. Plaque signalétique à l'épreuve du feu selon la revendication 1, **caractérisée en ce que** les symboles (4) sont disposés à une certaine distance de la couche intermédiaire (3).
